# EUROPEAN PATENT APPLICATION

(11) **EP 2 873 712 A1**
(43) Date of publication of application: **20.05.2015**
(21) Application number: 14193308.5
(22) Date of filing: 14.11.2014
(51) Int. Cl.: C09K 19/02, C09K 19/54

(54) **Polymer stabilized electrically suppressed helix ferroelectric liquid crystal cell**

(30) Priority: 18.11.2013 US 201361962854 P; 12.11.2014 US 201414538824
(71) Applicant: Nano And Advanced Materials Institute Limited, Kowloon, Hong Kong (CN)
(72) Inventor: Srivastava, Abhishek Kumar, Clear Water Bay, Kowloon (CN); Ma, Ying, Clear Water Bay, Kowloon (CN); Guo, Qi, Clear Water Bay, Kowloon (CN); Chigrinov, Vladimir Grigorievich, Clear Water Bay, Kowloon (CN); Kwok, Hoi Sing, Clear Water Bay, Kowloon (CN)
(74) Representative: Modiano, Micaela Nadia

(57) **Abstract**

The present invention provides an electrically suppressed helix ferroelectric liquid crystal (ESHFLC) cell with polymer stabilization. The cell has a liquid crystal (LC) material that is a mixture comprising a monomer, a photo-initiator and a ferroelectric liquid crystal (FLC) where a polymer network has been established at a certain temperature to achieve constraints of ESHFLC electro-optical mode. The resultant mixture is characterized by a helix pitch less than and comparable to a FLC layer thickness of the cell, and provides a selective reflection in an UV region. The concentration of the monomer in the pure FLC mixture has also been optimized for the phase diagram, scattering and the tilt angle. The resultant mixture, i.e. the polymer stabilized ESHFLC cell, follows all constraints of the ESHFLC electro-optical mode and shows electro-optical characteristics similar to a typical ESHFLC cell.

## Description

### CROSS-REFERENCE TO RELATED APPLICATION

This application claims the benefit of U.S. Provisional Application No. 61/962,854, filed November 18, 2013, the disclosure of which is incorporated by reference herein in its entirety.

### FIELD OF THE INVENTION

The present invention generally relates to a liquid crystal (LC) display. More particularly, the present invention relates to a field sequential color display (FSC) based on a ferroelectric liquid crystal (FLC) cell with fast response having the alignment quality of the same level as nematic LCs comprising a monomer, a photo initiator and a FLC where the helix pitch of the composite is less than the thickness of LC layer.

### BACKGROUND

There follows a list of references that are occasionally cited in the specification. Each of the disclosures of these references is incorporated by reference herein in its entirety.

### List of references

[1] LEE, J.-H., LIM, T.-K., KWON, Y.-W., and JIN, J.-I. (2005), "Memory effects in polymer stabilized ferroelectric liquid crystals, and their dependence on the morphology of the constituent molecules," Journal of Applied Physics, vol. 97, issue 8, pp. 84907, April 2005.
[2] ARCHER, P. and DIERKING, I. (2009), "Electro-optic properties of polymer-stabilized ferroelectric liquid crystals before, during and after photo-polymerization," Journal of Optics A: Pure and Applied Optics, vol. 11, no. 2, pp. 024022, 15 January 2009.
[3] GUYMON, C.A. et al. (1998), "Polymerization Conditions and Electrooptic Properties of Polymer-Stabilized Ferroelectric Liquid Crystals," Chem. Mater., vol. 10, issue 9, pp 2378-2388, 13 August, 1998.
[4] FURUE, H., YOKOYAMA, H., and KOBAYASHI, S. (2001), "Newly Developed Polymer-Stabilized Ferroelectric Liquid Crystals: Microsized Bistable Domains and Monostable V-Shaped Switching," Japanese Journal of Applied Physics, vol. 40, part 1, no. 9B, pp. 5790, September 2001.
[5] ARCHER, P., DIERKING, I., and OSIPOV M. (2008), "Landau model for polymer-stabilized ferroelectric liquid crystals: experiment and theory," Phys. Rev. E, vol. 78, pp. 051703, 18 November 2008.

There follows a list of patents and patent applications occasionally cited in the specification.

### List of patents and patent applications cited

[6] FUJISAWA, T., TAKEUCHI, K., HATSUSAKA, K., NISHIYAMA, I., and KOBAYASHI, S. (2010), "POLYMER-STABILIZED LIQUID CRYSTAL COMPOSITION, LIQUID CRYSTAL DISPLAY DEVICE, METHOD FOR PRODUCING LIQUID CRYSTAL DISPLAY DEVICE," US2010149446 (A1), 17 June 2010.
[7] ZHAO, Y., and PAIEMENT, N. (2002), "OPTICALLY ALIGNED AND NETWORK-STABILIZED FERROELECTRIC LIQUID CRYSTALS USING AZOBENZENE-CONTAINING DIACRYLATE MONOMERS," CA2330894 (A1), 2002-07-12.
[8] KUMAR, S. (1995), "Polymer dispersed ferroelectric smectic liquid crystal," EP0665279 (A1), 2 August 1995.
[9] MOCHIZUKI, A. (2007), "LIQUID CRYSTAL DISPLAY DEVICE," WO2007001088 (A1), 4 January 2007.
[10] THOMAS, E.L., and OBER, C.K. (2000), "MICROPHASE STABILIZED FERROELECTRIC LIQUID CRYSTALS," EP1042428 (A2), 11 October 2000.
[11] KORNFIELD, J.A., and KEMPE, M.D. (2001), "POLYMERS FOR CONTROL OF ORIENTATION AND STABILITY OF LIQUID CRYSTALS," WO/2001/077255 (A2), 18 October 2001.
[12] KORNFIELD, J.A., WAND, M., and KURJI, Z. (2010) "FERROELECTRIC LIQUID CRYSTAL (FLC) POLYMERS," WO/2010/088333 (A2), 5 August 2010.

The most important applications of a LC cell with fast response, high resolution and contrast may also include fast response photonics devices, such as modulators, filters, attenuators and high-resolution displays such as pico-projectors, 3D displays, micro-displays and HDTVs, etc.

The present invention is concerned with an electrically suppressed helix ferroelectric liquid crystal (ESHFLC). For such applications, the FLC material with the proper material parameters to satisfy the constraints of the ESHFLC material is needed. To find or synthesize a FLC material with all material parameters exactly matching with the requirement is very difficult. However, some stabilization of the fine-tuned parameter is one approach for finding appropriate material parameters for the ESHFLC systems. Stabilization through a polymer network in a pure FLC is one of the simplest approaches, and has drawn the Inventors' attention in a research, which has led to the present invention.

In the present invention, it is disclosed a polymer stabilized ESHFLC cell. The disclosed cell comprises a composite FLC formed by a blended mixture of a monomer that forms a polymer network, a photo initiator and a pure ferroelectric liquid crystal. In particular, the polymer network has been established at a certain temperature to achieve constraints of ESHFLC electro-optical mode. The present invention is different from the FLC cells or the FLC materials mentioned in [1]-[12] in that the composite FLC of the presently-disclosed ESHFLC cell has a helix having a pitch less than and comparable to a FLC layer thickness of a cell as well as provides selective reflection in an ultraviolet (UV) region.

### SUMMARY OF THE INVENTION

The present invention provides a polymer stabilized ESHFLC cell comprising a composite FLC formed by a blended mixture of a monomer, a photo initiator and a pure FLC. The monomer is polymerized such that a polymer network is formed in the cell. The pure FLC is stabilized by the polymer network in order that the composite FLC has a helix having a pitch less than and comparable to a FLC layer thickness of the cell as well as provides selective reflection in a UV region. By this arrangement, an elastic energy of the helix is comparable to an anchoring energy of aligning substrates of the cell.

Preferably, the cell is prepared by mixing the monomer in the pure FLC in an optimal concentration of having less than 10% of monomer in the pure FLC.

The monomer may be polymerized by thermal imidization or by photo polymerization. In one option, the monomer is polymerized after heating the blended mixture at an optimum temperature that provides an acceptable tilt angle close to 22.5°. In another option, the monomer is polymerized after heating the blended mixture at an optimum temperature that provides the helix pitch comparable to and less than the FLC layer thickness. In yet another option, the monomer is polymerized after heating the blended mixture at an optimum temperature that configures the helix pitch to unwind at an electric field less than 0.5 V/µm.

Optionally, the monomer in the pure FLC has a concentration optimized to have a negligible effect on a phase diagram of the pure FLC, thereby providing a wide temperature range of ferroelectric phase.

In one optional arrangement, the monomer and a material that forms an alignment layer of the cell are different in absorption wavelength at least by a bandwidth of the material's absorption peak.

In another optional arrangement, the cell further comprises two transparent current conducting layers each coated with an alignment layer, wherein the composite FLC is sandwiched between the two transparent current conducting layers, and the cell is positioned between two polarizers for providing electro-optical modulation.

In yet another optional arrangement, the cell provides optically saturated electro-optical modulation up 1kHz with a contrast ratio greater than 10000:1 and a response time less than 30µs.

Other aspects of the present invention are disclosed as illustrated by the embodiments hereinafter.

### BRIEF DESCRIPTION OF THE DRAWINGS

FIG. **1** depicts a schematic diagram of an ESHFLC cell in accordance with a first embodiment of the present invention.
FIG. **2** depicts an absorption spectrum for a homeotropically aligned pure and monomer-mixed FLC mixtures.
FIG. **3** illustrates temperature dependence of a tilt angle for a pure FLC and a monomer FLC mixture.
FIG. **4** illustrates transmittance against an applied electric field for the bright and dark state of the monomer FLC mixture.
FIG. **5** is a plot of a response time against an applied voltage for the pure and monomer FLC of the homogeneously aligned FLC, where *E_{c}* represents the critical voltage for the helix unwinding.

### DETAILED DESCRIPTION

As mentioned above, stabilization through a polymer network in a pure FLC is one of the simplest approaches. Therefore, using a polymer network for stabilization has been chosen to serve the purpose for the present invention.

The first observation that comes to notice for such composite composed of the pure FLC and the polymer network is the phase transition scheme and the scattering. To avoid the scattering, it is important that the index of the polymer and FLC mixture matches well. The phase sequence for the doped system has already been studied many times in the past. It has been revealed that the phase scheme could be altered and strongly depends on the concentration of the guest entity in the pure materials. In light of these limitations, the Inventors have made the investigation that leads to the present invention by choosing monomer RMM257 from Merck as the guest and pure FLC FD4004N from Dianippon Ink and Chemical Ltd. as the host.

As expected, the transition temperature, particularly the ferroelectric to para-electric phase transition temperature, decreases with the addition of the monomer in the pure FLC matrix, and it has been observed that the scattering is also very high for higher concentrations. However, for concentrations less than 5% wt/wt change, the transition temperature and the scattering are very small and in the acceptable range. Thus, in the present invention, the Inventors have mixed the monomer with a pure FLC matrix in a concentration within acceptable limits. Furthermore, the pure FLC parameters are temperature dependent so that the electro-optical studies of different mixtures of RMM257 and FLC have been done as a function of temperature to find the temperature with most appropriate material parameters for the ESHFLC electro-optical mode. After securing the appropriate concentration of the monomer in pure FLC and temperature with material parameter suitable for the ESHFLC mode, the mixture has been heated to that temperature and thereafter the monomer was stabilized by the UV light exposure. Thus, the engineered FLC material by the polymer network provides all suitable parameters for the ESHFLC electro-optical mode and therefore serves as the potential candidate for the field sequential color displays based on ESHFLC.

Recently, it has been revealed that a FLC having helix pitch comparable and less than the FLC layer thickness, with the necessary condition of elastic energy of the helix obligatory larger than the normalized anchoring energy of the alignment layer, shows ESHFLC electro-optical mode. The ESHFLC electro-optical mode is characterized by the high contrast (comparable to nematic LCs), fast response time (at least one order of magnitude smaller than the nematic LCs) and low driving voltage. However, these constraints of the ESHFLC cannot be satisfied by the simple FLCs. It follows that stabilization of fine-tuned FLC parameters is needed. This stabilization is realizable by introducing the polymer network in pure FLC material.

This present invention discloses a FLC cell wherein the FLC material is composed of a monomer, a photo-initiator and pure FLC, where the polymer network has been established at a certain temperature to achieve constraints of ESHFLC electro-optical mode.

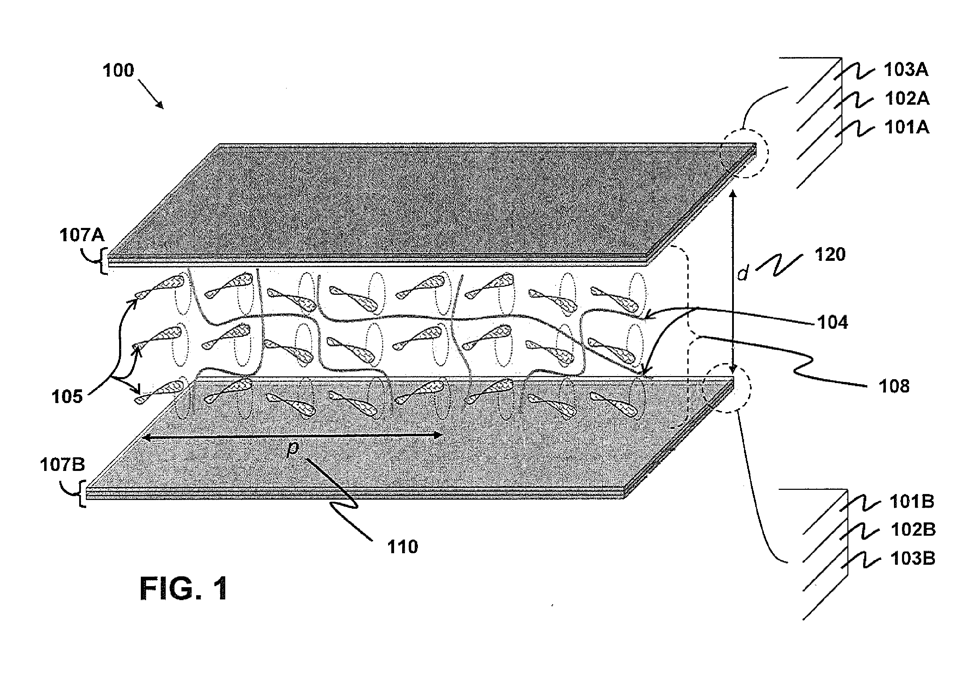

FIG. 1 depicts a schematic diagram of an ESHFLC cell according to a first embodiment of the present invention. A polymer stabilized ESHFLC cell **100** comprises a composite FLC **108** formed by a blended mixture of a monomer, a photo initiator and a pure FLC **105.** The monomer is polymerized such that a polymer network **104** is formed in the polymer stabilized ESHFLC cell **100.** FLC parameters of the cell **100** are stabilized by stabilizing the polymer network **104,** by UV exposure as an example, in the pure FLC **105** under specific conditions that include surrounding temperature and presence of the electric field. Advantageously, the pure FLC is stabilized by the polymer network in order that the composite FLC **108** has a helix having a pitch *p* **110** less than and comparable to a FLC layer thickness *d* **120** of the cell **100** as well as provides selective reflection in an UV region, whereby an elastic energy of the helix is comparable to an anchoring energy of aligning substrates of the cell **100.**

Preferably, the cell **100** is prepared by mixing the monomer in the pure FLC **105** in an optimal concentration of having less than 10% of monomer in the pure FLC **105.** In one option, the monomer in the pure FLC has a concentration optimized to have a negligible effect on a phase diagram of the pure FLC, thereby providing a wide temperature range of ferroelectric phase.

In the polymer stabilized ESHFLC cell **100,** the composite FLC **108** is arranged between a first plate **107A** and a second plate **107B.** Typically, the first plate **107A** comprises a first transparent substrate **101A**, a first indium tin oxide (ITO) layer **102A** and a first alignment layer **103A.** Similarly, the second plate **107B** usually comprises a second transparent substrate **101B**, a second ITO layer **102B** and a second alignment layer **103B.** The composite FLC **108** is sandwiched between the first transparent substrate **101A** and the second transparent substrate **101B**. Note that the first ITO layer **102A** and the second ITO layer **102B** are current conducting layers. Usually, each of the current conducting layers is further coupled to one polarizer such that the cell **100** is positioned between the two polarizers for providing electro-optical modulation.

In one option, the monomer and a material that forms an alignment layer (i.e. the first alignment layer **103A** or the second alignment layer **103B**) of the cell **100** are different in absorption wavelength at least by a bandwidth of the alignment-layer material's absorption peak.

The monomer may be polymerized by thermal imidization or by photo polymerization.

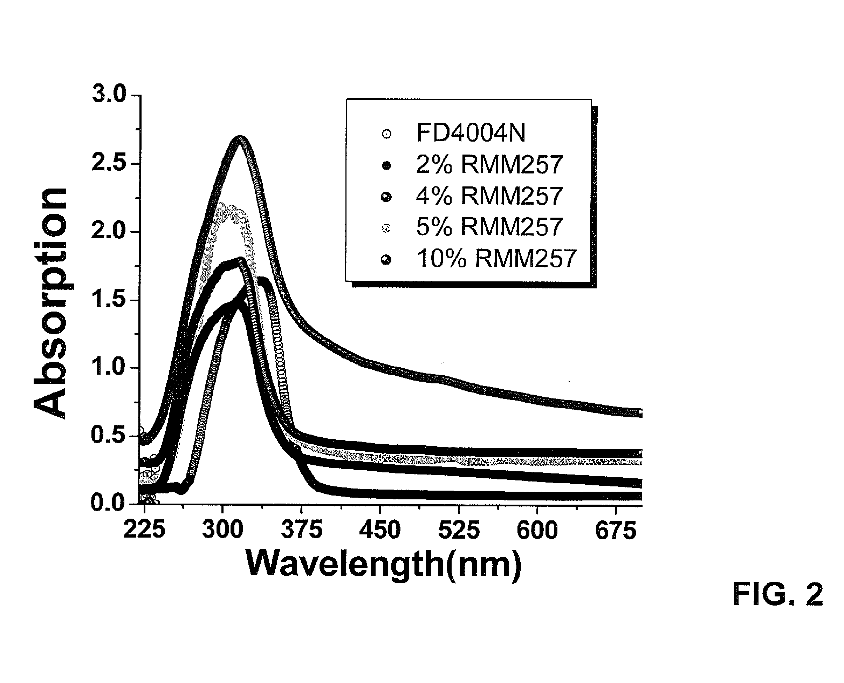

In a second embodiment of the present invention, it is disclosed that the stabilization of the polymer network **104** is done at a temperature when the helix pitch *p* **110** of both the monomer and the blended mixture in the composite FLC **108** is smaller than the FLC layer thickness *d* **120,** so that selective reflections are in the UV range. FIG. **2** depicts an absorption spectrum for a homeotropically aligned pure and monomer-mixed FLC mixtures. It is shown that an absorption peak indicating the selective-reflection wavelength has a blue shift for the composite FLC **108.** Therefore, the selective reflection of the polymer stabilized ESHFLC cell **100** shifts towards the UV region. In one option, the monomer is polymerized for stabilization after heating the blended mixture at an optimum temperature that provides the helix pitch *p* **110** comparable to and less than the FLC layer thickness *d* **120.**

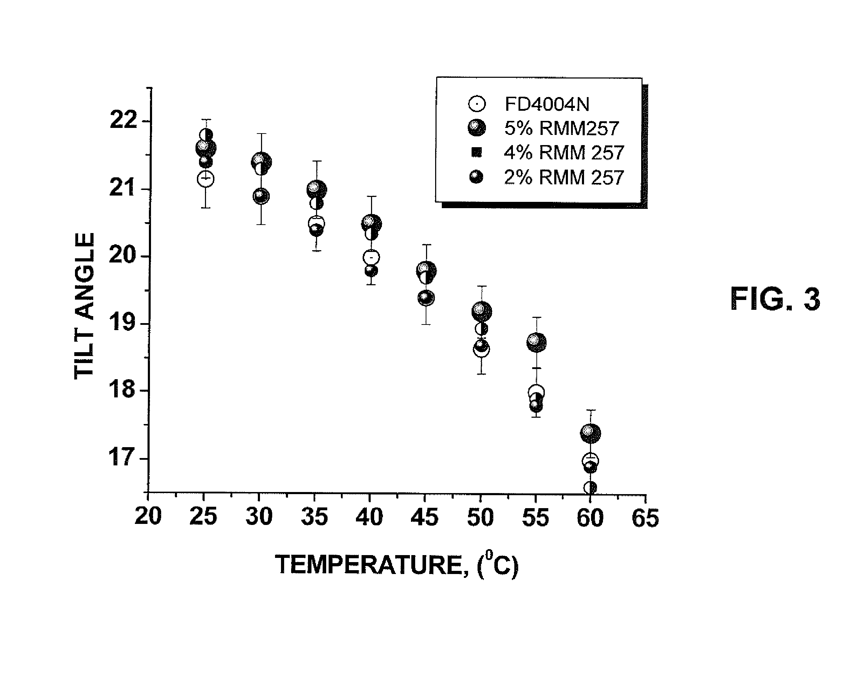

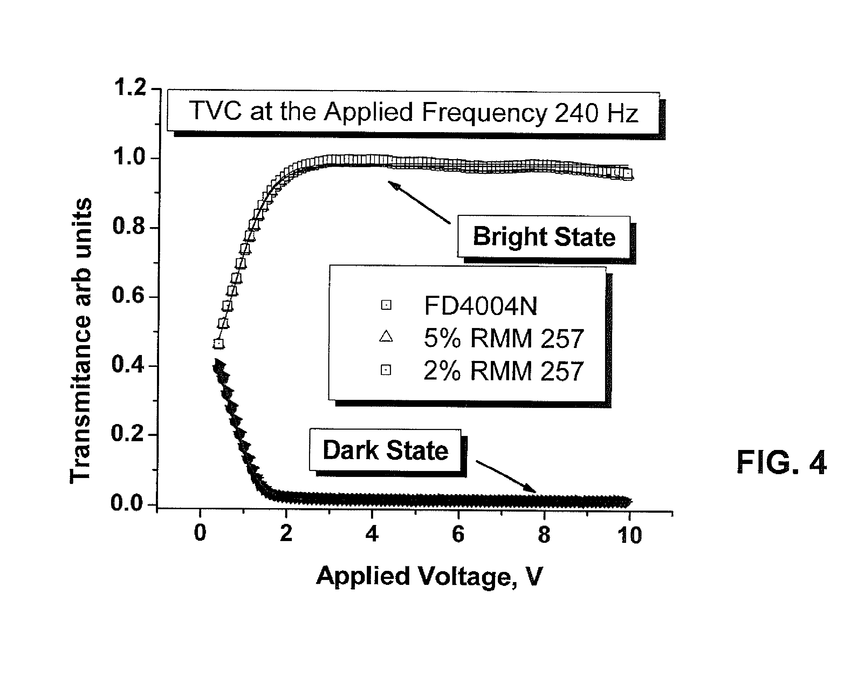

In a third embodiment of the present invention, it is disclosed that the tilt angle of the polymer stabilized ESHFLC cell **100** is substantially close to that of a pure FLC, as is shown in FIG. **3****,** while the disclosed cell **100** and the pure FLC show substantially similar temperature-dependence characteristics. Thus, the optical quality in terms of brightness is not affected by the polymer stabilization. It is demonstrated in FIG. **4****,** which plots an optical transmittance against an applied voltage and shows substantially similar levels of brightness achieved by LC cells including a pure FLC system and polymer stabilized ESHFLC cells having different concentrations of the monomer. In one option, the monomer is polymerized for stabilization after heating the blended mixture at an optimum temperature that provides an acceptable tilt angle close to 22.5°.

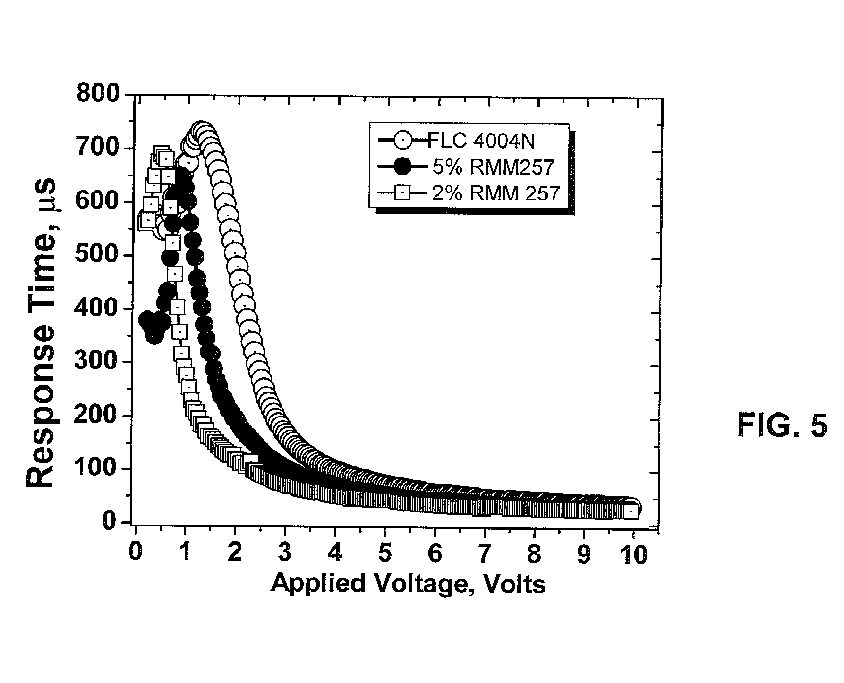

In a fourth embodiment of the present invention, it is disclosed that for the polymer stabilized ESHFLC cell **100,** the critical electric field for helix unwinding shifts towards the lower voltage range. FIG. **5** plots a response time against an applied voltage. It is shown that a peak (which represents the critical field of helix unwinding *E_{c}*) shifts towards a lower voltage in the presence of polymer stabilization. Hence, the elastic energy of the helix decreases and thus material parameters of the resultant composite FLC **108** are within constraints of the ESHFLC mode. In one option, the monomer is polymerized for stabilization after heating the blended mixture at an optimum temperature that configures the helix pitch *p* **110** to unwind at an electric field less than 0.5 V/µm

In a fifth embodiment of the present invention, it is disclosed that the resultant polymer stabilized ESHFLC with the cell **100** designed according to the ESHFLC constraints (i.e. that the FLC layer thickness *d* **120** is greater than the FLC helix pitch *p* **110** and that the normalized anchoring energy of the alignment layer is comparable and obligatory less than the elastic energy of the FLC helix) has a response time less than 30µs, thereby supporting optically saturated bright and dark states even up to an applied frequency of 1kHz. Moreover, the contrast ratio offered by the cell **100** is more than 10000:1.

The present invention may be embodied in other specific forms without departing from the spirit or essential characteristics thereof. The present embodiment is therefore to be considered in all respects as illustrative and not restrictive. The scope of the invention is indicated by the appended claims rather than by the foregoing description, and all changes that come within the meaning and range of equivalency of the claims are therefore intended to be embraced therein.

## Claims

1. A polymer stabilized electrically suppressed helix ferroelectric liquid crystal cell comprising a composite ferroelectric liquid crystal formed by a blended mixture of a monomer, a photo initiator and a pure ferroelectric liquid crystal, the monomer being polymerized such that a polymer network is formed in the cell, wherein:
the pure ferroelectric liquid crystal is stabilized by the polymer network in order that the composite ferroelectric liquid crystal has a helix having a pitch less than and comparable to a ferroelectric liquid crystal layer thickness of the cell as well as provides selective reflection in an ultraviolet (UV) region, whereby an elastic energy of the helix is comparable to an anchoring energy of aligning substrates of the cell.

2. The cell of claim 1, wherein the cell is prepared by mixing the monomer in the pure ferroelectric liquid crystal in an optimal concentration of having less than 10% of monomer in the pure ferroelectric liquid crystal.

3. The cell of claim 1, wherein the monomer is polymerized after heating the blended mixture at an optimum temperature that provides an acceptable tilt angle close to 22.5°.

4. The cell of claim 1, wherein the monomer is polymerized after heating the blended mixture at an optimum temperature that provides the helix pitch comparable to and less than the ferroelectric liquid crystal layer thickness.

5. The cell of claim 1, wherein the monomer is polymerized after heating the blended mixture at an optimum temperature that configures the helix pitch to unwind at an electric field less than 0.5 V/µm.

6. The cell of claim 1, wherein the monomer in the pure ferroelectric liquid crystal has a concentration optimized to have a negligible effect on a phase diagram of the pure ferroelectric liquid crystal, thereby providing a wide temperature range of ferroelectric phase.

7. The cell of claim 1, wherein the monomer is polymerized by thermal imidization.

8. The cell of claim 1, wherein the monomer is polymerized by photo polymerization.

9. The cell of claim 1, wherein the monomer and a material that forms an alignment layer of the cell are different in absorption wavelength at least by a bandwidth of the material's absorption peak.

10. The cell of claim 1, further comprising:
two transparent current conducting layers each coated with an alignment layer;
wherein:
the composite ferroelectric liquid crystal is sandwiched between the two transparent current conducting layers; and
the cell is positioned between two polarizers for providing electro-optical modulation.

11. The cell of claim 1, wherein the cell provides optically saturated electro-optical modulation up 1kHz with a contrast ratio greater than 10000:1 and a response time less than 30µs.
